Europäisches Patentamt

European Patent Office

Office européen des brevets

(11) Veröffentlichungsnummer: **0 187 331 B1**

## EUROPÄISCHE PATENTSCHRIFT

(45) Veröffentlichungstag der Patentschrift: **29.05.91**

(51) Int. Cl.⁵: **C09C 1/24**

(21) Anmeldenummer: **85116197.6**

(22) Anmeldetag: **18.12.85**

(54) Verfahren zur Herstellung heller farbreiner Eisenoxidrotpigmente.

(30) Priorität: **09.01.85 DE 3500470**

(43) Veröffentlichungstag der Anmeldung:
**16.07.86 Patentblatt 86/29**

(45) Bekanntmachung des Hinweises auf die
Patenterteilung:
**29.05.91 Patentblatt 91/22**

(84) Benannte Vertragsstaaten:
**DE FR GB IT**

(56) Entgegenhaltungen:

| | |
|---|---|
| BE-A- 817 360 | DE-A- 2 508 932 |
| DE-A- 2 919 854 | DE-B- 1 792 272 |
| FR-A- 2 067 276 | FR-A- 2 202 133 |
| FR-A- 2 261 980 | FR-A- 2 308 669 |
| FR-A- 2 376 889 | GB-A- 762 102 |
| GB-A- 2 023 559 | GB-A- 2 040 904 |
| US-A- 2 866 686 | US-A- 4 256 508 |
| US-A- 4 297 395 | US-A- 4 459 276 |

CHEMICAL ABSTRACTS, Band 94, Nr 4, Januar 1981, Seite 127, Ref.Nr. 17842q, Columbus, Ohio, US; & JP-A-80 18 662 (TSURUMI SODA CO. LTD) 20-05-1980

(73) Patentinhaber: **BAYER AG**

**W-5090 Leverkusen 1 Bayerwerk(DE)**

(72) Erfinder: **Burow, Wilfried, Dr.**
**Sollbrüggenstrasse 33**
**W-4150 Krefeld(DE)**
Erfinder: **Wiese, Jürgen, Dr.**
**Husarenallee 1**
**W-4150 Krefeld(DE)**
Erfinder: **Buxbaum, Gunter, Dr.**
**Holzapfelweg 2**
**W-4150 Krefeld(DE)**

## Beschreibung

Die vorliegende Erfindung betrifft ein Verfahren zur Herstellung heller farbreiner Eisenoxidrotpigmente durch Fällung von Eisen(II)salzen mit Alkali in wäßriger Lösung und Oxidation bei Temperaturen von 20 bis 100° C und Verglühen der so erhaltenen Fällprodukte unter Luft zu Eisenoxidrotpigmenten sowie die Verwendung dieser Eisenoxidrotpigmente.

Es sind grundsätzlich vier Verfahren zur Herstellung von synthetischem Eisenoxidrot bekannt, wobei eins die Oxidation von Eisenoxidschwarz $Fe_3O_4$ ist (T.C. Patton, Pigment Handbook, Vol. 1, John Wiley & Sons, 1973).

Eisenoxidrotpigmente werden in der Baustoff- und Lackindustrie eingesetzt. Insbesondere für die Anwendung in Lacksystemen sind helle farbreine Eisenoxidrotpigmente erwünscht. Der Farbton des Pigmentes wird im Lack gemäß DIN 6174 (äquivalent ISO/DIN 7724, 1-3 drafts) ermittelt. Als Maß für die Farbreinheit des Eisenoxidrotpigmentes gilt der im Lack ermittelte Rotanteil a*.

Durch die Auswahl des Vorproduktes, nämlich nadelförmiger Goethit oder isometrischer Magnetit, nimmt man Einfluß auf den Farbton des nach Glühen entstehenden Eisenoxidrotpigmentes. Der Einsatz von nadelförmigem Goethit ergibt Rotpigmente mit einem unerwünschten Gelbstich. Feinteilige isometrische Magnetite hingegen ergeben beim Verglühen ein farbreineres Eisenoxidrot. Feinteilige Magnetite selbst sind aber nur nach dem Anilinverfahren, wobei Nitroaromaten als Oxidationsmittel wirken, erhältlich.

Zur Fällung von Magnetit als Vorprodukt für Eisenoxidrotpigmente werden als Rohstoff üblicherweise technische Eisen(II)salze eingesetzt, wie sie als Abfallaugen in Stahlbeizereien und Titandioxidfabriken anfallen. Diese Abfallaugen weisen üblicherweise einen geringen, wechselnden Eisen(III)gehalt auf. Die Fällung geschieht z.B. mit NaOH, $Na_2CO_3$, MgO, $MgCO_3$ oder $NH_3$. Als Oxidationsmittel setzt man bei der Magnetitfällung Sauerstoff, Luft, Chlorate, Nitrate, Peroxide usw. ein.

Zur Fällung von isometrischen Magnetiten sind drei Verfahren bekannt, das Einstufenverfahren, das Zweistufenverfahren und das Eisen(III)chlorid-Verfahren.

Beim Einstufenverfahren (Winnacker-Küchler, Bd. 2, S. 171, München 1970) wird Eisenoxidschwarz in einem Schritt aus Eisen(II)salzen und Alkalien unter Begasung bei Temperaturen > 50° C und pH-Werten > 4,5 hergestellt. Das eingesetzte Eisen(II)salz soll dabei möglichst frei von Eisen(III)anteilen sein (DE-PS 2 919 854, S. 8, Zeilen 19ff.).

Im ersten Schritt des Zweistufenverfahrens (Winnacker-Küchler Bd. 2, S. 171, München 1970) wird ein Gelbkeim im sauren pH-Bereich (pH < 5) oder alkalischen pH-Bereich > 12 mit Alkalien unter Oxidation bei Temperaturen von Raumtemperatur bis 100° C gefällt. An diesen zeitaufwendigen Schritt schließt sich die Umsetzung des Gelbkeimes mit weiterem Eisen(II)salz und Alkalien zu Eisenoxidschwarz als zweite Verfahrensstufe an.

Das Eisen(III)chloridverfahren zur Fällung von Eisenoxidschwarz ist technisch besonders aufwendig. Es geht von Eisen(III)salz/Eisen(II)salz-Gemischen aus, deren Stöchiometrie in etwa der des Magnetits entspricht, d.h. zu etwa der Hälfte bis 2/3 aus teurem Eisen(III)salz besteht. Bei diesem Verfahren wird bevorzugt Eisen(III) chlorid (JP 56-60 789) eingesetzt, welches hochkorrosiv ist, mit Alkalien werden braunschwarze Eisenoxide gefällt.

Bei den genannten Fällverfahren erhält man Magnetite, die nach dem Verglühen zu Eisenoxidrot mittelfeine bis grobe Eisenoxidrotpigmente ergeben. Nachteil dieser Verfahren ist es, daß sie nicht den koloristisch wertvollen Bereich heller, farbreiner Eisenoxidrotpigmente erschließen.

Um durch Verglühen von Fällungsmagnetit zu hellen, farbreinen Eisenoxidrotpigmenten zu gelangen, ist es nötig, daß die röntgenographisch bestimmte Kristallitgröße des Fällungsmagnetits ca. 30 bis 50 nm und die spezifische Oberfläche $S_{BET}$ 25 bis 60 m²/g beträgt. Magnetite, deren Teilchengröße bzw. Kristallitgröße in dem zuvor benannten Bereich liegt, sind mit den drei genannten Fällverfahren nicht erhältlich.

Es sind verschiedene Maßnahmen bekannt, die bei der Fällung von Eisenoxidschwarz zu Produkten im geforderten Kristallitgrößen- und BET-Oberflächenbereich führen. Zu diesen Maßnahmen gehört das Herabsetzen der Reaktionstemperatur und das Erniedrigen des pH-Wertes während der Fällung. In diesen Fällen erhält man jedoch nach der Fällung ein uneinheitliches Produkt aus isometrischem Magnetit und nadelförmigen Komponenten wie α-FeOOH und γ-FeOOH. Nach Verglühen dieser gefällten Eisenoxide gelangt man zu α-$Fe_2O_3$ mit uneinheitlicher Teilchenform und störendem Gelbstich.

Die Aufgabe der vorliegenden Erfindung ist es somit, ein kostengünstiges technisch elegantes Verfahren zur Herstellung von isometrischen Eisenoxidrotpigmenten zur Verfügung zu stellen, welches die Nachteile der eingangs beschriebenen Verfahren nicht aufweist.

Überraschenderweise wurde nun ein solches Verfahren gefunden, wobei auf dem Fällungsweg in Gegenwart von Eisen(III)-Ionen Magnetite hergestellt werden, die nach dem Glühen helle farbreine Eisenoxidrotpigmente ergeben. Die Teilchengröße kann dabei über den Eisen(III)gehalt gesteuert werden.

Im Gegensatz zu dem zuvor beschriebenen Eisen(III)chloridverfahren benötigt man bei dem erfindungsgemäßen Verfahren kein teures, korrosives Eisen(III)chlorid.

Der Gegenstand der vorliegenden Erfindung ist somit ein Verfahren zur Herstellung heller farbreiner Eisenoxidrotpigmente durch Fällung von Eisen(II)salzen mit Alkali in wäßriger Lösung und Oxidation bei Temperaturen von 20 bis 100° C und Verglühen der so erhaltenen Fällprodukte unter Luft zu Eisenoxidrotpigmenten, wobei vor der Zugabe des alkalischen Fällmittels ein Fe(III)-Gehalt von 1 bis 15 Mol-%, bezogen auf den Gesamteisengehalt der Eisensalzlösung, eingestellt wird. Bevorzugt wird bei diesem Verfahren Luft als Oxidationsmittel eingesetzt.

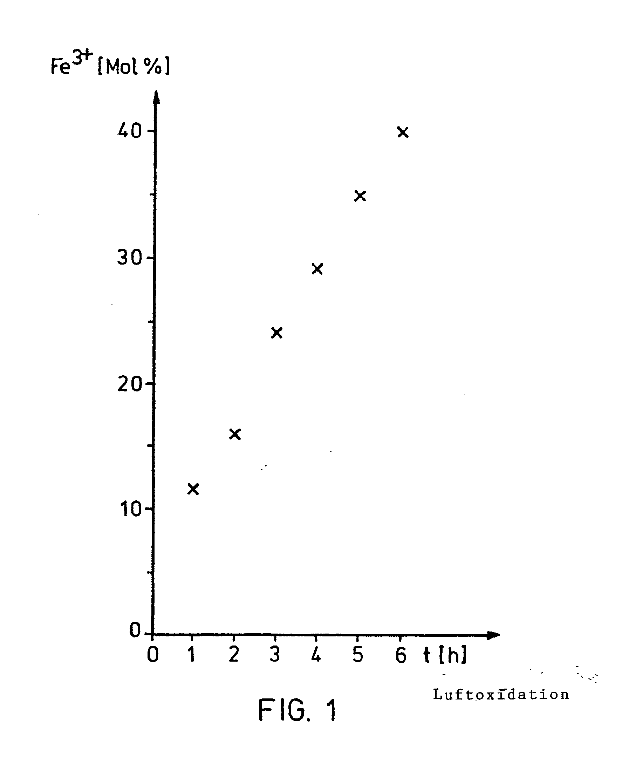

Zu Beginn des Verfahrens erzeugt man in einer Eisen (II)salzlösung, wobei als Eisen(II)salze bevorzugt Sulfate und/oder Chloride aus Stahlbeizereien und/oder der Titandioxidproduktion eingesetzt werden, den zur Steuerung der Magnetitteilchengröße benötigten Eisen (III)-Gehalt. Dies geschieht bevorzugt, indem man die saure Eisen(II)salzlösung, z.B. eine Eisen(II)sulfat mit pH<3, oxidierend begast. Mit der Begasungsdauer steigt der Eisen(III)gehalt an (Fig. 1). Bevorzugt wird dabei der Eisen(III)gehalt bei einem pH-Wert <3 durch Oxidation mittels Luft erzeugt. Diese Vorbegasung wird zweckmäßigerweise unter Einsatz eines Begasungsrührers in einem Rührbehälter bei Temperaturen von ca. 20 bis 100° C ausgeführt. Ebenso können auch andere zur Durchführung von Gas/Flüssig-Reaktionen geeignete Reaktoren wie Blasensäulen, Schlaufenreaktoren, Strahler usw. benutzt werden.

In kurzer Zeit erhält man eine klare pigmentfreie Lösung mit dem gewünschten Eisen(III)gehalt. Überraschenderweise ist die Lösung frei von ausgefällten, störenden basischen Eisen(III)sulfaten. In welcher Form das dreiwertige Eisen in der Lösung vorliegt, ist nicht geklärt. Der zur Herstellung der Magnetite benötigte Eisen(III)gehalt bewegt sich im Bereich von 1 bis 15 Mol-% Eisen(III), bezogen auf den Gesamteisengehalt.

Im Anschluß an die Vorbegasung erfolgt die Fällung und Oxidation zu Magnetit. Dabei werden als Fällmittel bevorzugt NaOH, $NH_3$, $Na_2CO_3$, MgO und/oder $MgCO_3$ eingesetzt. Besonders gute Ausbeuten werden erlangt, wenn mit 0,5 bis 1,3 Äquivalenten, bevorzugt 0,8 bis 1,3, des alkalischen Fällmittels gefällt und vorzugsweise mit Luft oxidiert wird. Die Reaktionstemperatur beträgt 20 bis 100° C, vorzugsweise oberhalb von 70° C. Die Fällungsprodukte werden salzfrei gewaschen, getrocknet und bei 700 bis 1100° C, vorzugsweise bei 800 bis 950° C, geglüht, um nach Mahlung helle, farbreine Eisenoxidrotpigmente zu erhalten.

Nach dem Verglühen der Magnetite erhält man helle, farbreine Eisenoxidrotpigmente mit Teilchengrößen < 0,2 $\mu$m und einem Farbton im Lack, dessen Rotanteil a* mehr als 26 CIELAB-Einheiten beträgt. Solche Eisenoxidrotpigmente mit hoher Farbreinheit (a* > 26 CIELAB-Einheiten) sind nicht durch Verglühen von Magnetiten erhältlich, die auf dem üblichen Fällungsweg hergestellt werden. Der Farbton des Eisenoxidpigmentes wird gemäß DIN 6174 (äquivalent ISO/DIN 7724, 1-3 drafts), CIELAB c/2 grd bei einer 10 %igen Pigmentvolumenkonzentration (PVK) im Lack ermittelt. Als Lacksystem wird Alkydal F 48 (Handelsprodukt der BAYER AG) verwendet.

Weiterhin wurde gefunden, daß man durch Zusatz löslicher Aluminium- und Phosphorsalze zur Eisensalzlösung vor der Fällung die Koloristik des Endproduktes günstig beeinflussen kann. Die Zugabe dieser Verbindungen erfolgt vorteilhafterweise dadurch, daß vor der Fällung ein lösliches Aluminiumsalz in Mengen von 1 bis 10 Mol-% und/oder ein lösliches Phosphorsalz in Mengen von 1 bis 5 Mol-%, jeweils bezogen auf den Gesamteisengehalt, der Lösung zugesetzt werden.

Man beobachtet, daß man in Abhängigkeit vom eingesetzten Al- oder P-Gehalt die Helligkeit L* der Rotpigmente anheben kann. Die Helligkeitswerte L* erhält man bei der Farbtonbestimmung des Pigmentes in Lack gemäß DIN 6174 (äquivalent ISO/DIN 7724, 1-3 drafts).

Gegenstand der vorliegenden Erfindung ist auch die Verwendung der erfindungsgemäß hergestellten Eisenoxidrotpigmenten zur Einfärbung im Lack-, Keramik-, Baustoff-, Kunststoffbereich.

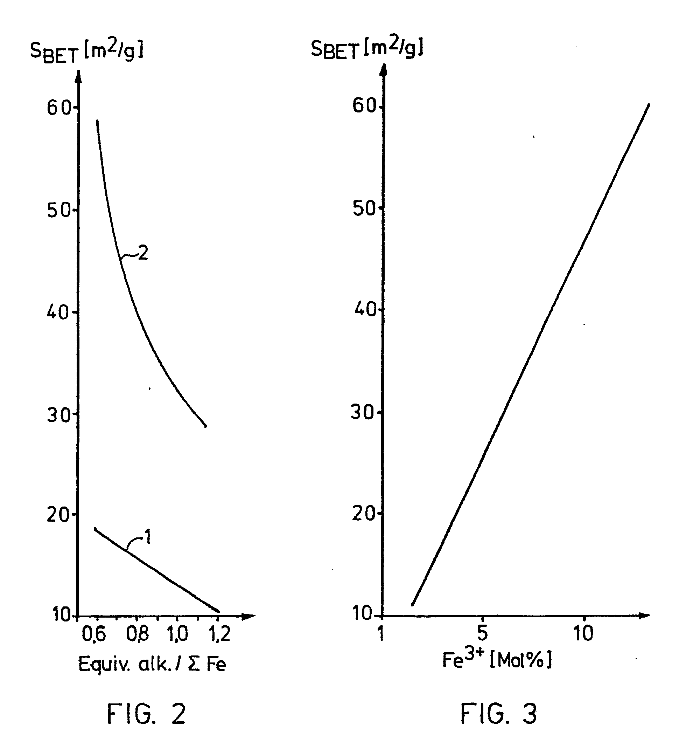

Die Fig. 1 zeigt den zeitlichen Verlauf der Einstellung des Eisen(III)gehaltes bei Luftoxidation entsrpechend Beispiel 1. Fig. 2 zeigt den Einfluß des Äquivalentverhältnisses Fällmittel/Gesamteisengehalt ohne (Kurve 1) und mit 8,3 Mol-% Eisen(III) (Kurve 2) auf die Teilchengröße des Magnetits, ausgedrückt durch die spezifische Oberfläche. Fig. 3 zeigt den Einfluß des Eisen(III)gehaltes auf die Teilchengröße des Magnetites, ausgedrückt durch die spezifische Oberfläche, bei konstantem Äquivalentverhältnis Fällmittel/Gesamteisengehalt von 0,8.

Die nachfolgenden Beispiele beschreiben die Erzeugung des Eisen(III)gehaltes in der Eisen(II)-salzlösung, die Fällung des Magnetits und das Verglühen zu Eisenoxidrotpigmenten mit einem Rotanteil a* > 26 CIELAB-Einheiten.

Die Beispiele sollen der Illustration des Verfahrens dienen und stellen keine Einschränkung dar.

Beispiel 1

In einem 30-l-Behälter, der mit einem Begasungsrührer ausgestattet ist, wird eine wäßrige Lösung von 21,7 Mol $FeSO_4$ in 22 l Lösung hergestellt. Der pH-Wert ist 2,1. Vor Beginn der Oxidation wird ein Eisen-(III)-gehalt von 0,45 Mol-% titrimetrisch bestimmt. Die Lösung wird auf 70°C erwärmt und Luft über den Begasungsrührer eingebracht. Die folgende Tabelle zeigt, wie der $Fe^{3+}$-Gehalt mit fortschreitender Reaktionszeit ansteigt. Zur Verdeutlichung ist dieser Zusammenhang in graphischer Form in Fig. 1 dargestellt.

| Zeit/h | $Fe^{3+}$/Mol-% |
|---|---|
| vor Beginn | 0,45 |
| nach Erwärmen unter Luft (0,5 h) | 4,0 |
| 1 | 11,8 |
| 2 | 18,0 |
| 3 | 24,0 |
| 4 | 29,2 |
| 5 | 35,4 |
| 6 | 40,7 |

Beispiel 2

Einstellung des Eisen(III)gehaltes
In einer 2,5-l-Glasapparatur, ausgerüstet mit Kreuzbalkenrührer, Begasungsring, Rückflußkühler und beheizt mit einem über Kontaktthermometer geregeltem Heizband, werden 1,95 l Eisen(II)sulfatlösung mit einem pH-Wert < 3 und einem Gehalt von 300 g $FeSO_4$ unter Luftbegasung mit dem Begasungsring auf 70°C aufgeheizt. Dabei stellt sich in 1,75 Stunden ein Eisen(III)gehalt von 8,3 Mol-%, bezogen auf den Gesamteisengehalt, ein.

Beispiel 3

Herstellung des Fällungsmagnetits und Eisenoxidrotpigments
In einer 2,5-l-Glasapparatur, ausgerüstet mit Kreuzbalkenrührer, Begasungsring, Rückflußkühler, beheizt mit einem über Kontaktthermometer geregelten Heizband, werden zu 1,95 l Eisen(II)sulfatlösung, in der 8,3 Mol-% Eisen(III)-Ionen erzeugt wurden, 0,6 Äquivalente Magnesiumoxid als Fällmittel in Form einer Aufschlämmung von gemahlenem Magnesiumoxid in Wasser zugegeben. Es wird auf 80°C aufgeheizt und begast. Das nach 4 Stunden erhaltene schwarze Eisenoxid wird salzfrei gewaschen, getrocknet und 1 Stunde unter Luft bei 800°C geglüht. Die Eigenschaften des gemahlenen Eisenoxidrotpigmentes sind in Tabelle 1 aufgeführt.

Beispiel 4

Es wird wie in Beispiel 3 verfahren, jedoch mit dem Unterschied, daß als Fällmittel 1 Äquivalent Magnesiumoxid eingesetzt wird. Die Eigenschaften des gemahlenen Eisenoxidrots sind in Tabelle 1 aufgeführt.

Beispiel 5

4

Es wird wie in Beispiel 3 verfahren, jedoch mit dem Unterschied, daß als Fällmittel 1 Äquivalent 9n NaOH eingesetzt wird. Die Eigenschaften des gemahlenen Eisenoxidrots sind in Tabelle 1 aufgeführt.

Beispiel 6

Es wird wie in Beispiel 3 verfahren, jedoch mit dem Unterschied, daß als Fällmittel 0,6 Äquivalente Magnesiumoxid eingesetzt werden und der Eisen(III)gehalt 5,6 Mol-% beträgt. Die Eigenschaften des gemahlenen Eisenoxidrots sind in Tabelle 1 aufgeführt.

Beispiel 7

Es wird wie in Beispiel 3 verfahren, jedoch mit dem Unterschied, daß als Fällmittel 1,1 Äquivalente MgO eingesetzt werden und 1,4 Mol-% Al, bezogen auf den Gesamteisengehalt, als $Al_2(SO_4)_3 \cdot 18H_2O$ vor der Fällung hinzugefügt werden. Die Eigenschaften des gemahlenen Eisenoxidrotpigmentes sind in Tabelle 1 aufgeführt.

Beispiel 8

Es wird wie in Beispiel 3 verfahren, jedoch mit dem Unterschied, daß als Fällmittel 1,1-Äquivalente MgO eingesetzt werden und 2,8 Mol-% Al, bezogen auf den Gesamteisengehalt, als $Al_2(SO_4)_3 \cdot 18H_2O$ vor der Fällung hinzugefügt werden. Die Eigenschaften des gemahlenen Eisenoxidrotpigmentes sind in Tabelle 1 aufgeführt.

Beispiel 9

Es wird wie in Beispiel 3 verfahren, jedoch mit dem Unterschied, daß als Fällmittel 1 Äquivalent 9n NaOH eingesetzt wird und 1,6 Mol-% P, bezogen auf den Gesamteisengehalt, als $Na_2HPO_4$ vor der Fällung hinzugefügt werden. Die Eigenschaften des gemahlenen Eisenoxidrotpigmentes sind in Tabelle 1 aufgeführt.
Vergleichsbeispiele:

Beispiel A

Es wird wie in Beispiel 3 verfahren, jedoch mit dem Unterschied, daß die Reaktion mit einer Eisen(II)-salzlösung aus der Stahlbeizung ausgeführt wird, deren Eisen(III)gehalt unter 0,5 Mol-% liegt. Die Fällung wird mit 1 Äquivalent 9n NaOH ausgeführt. Die Eigenschaften des gemahlenen Eisenoxidrotpigmentes sind in Tabelle 1 aufgeführt.

Beispiel B

Es wird wie in Beispiel 3 verfahren, jedoch mit dem Unterschied, daß die Reaktion mit einer Eisen(II)-salzlösung mit weniger als 0,5 Mol-% Eisen(III) durchgeführt wird. Die Fällung wird mit 1 Äquivalent MgO ausgeführt. Die Eigenschaften des gemahlenen Eisenoxidrotpigmentes sind in Tabelle 1 aufgeführt.

Beispiel C

Es wird wie in Beispiel 3 verfahren, jedoch mit dem Unterschied, daß die Reaktion mit einer Eisen(II)-salzlösung mit weniger als 0,5 Mol-% Eisen(III) durchgeführt wird. Es wird mit 0,6 Äquivalenten MgO gefällt. Die Eigenschaften des gemahlenen Eisenoxidrotpigmentes sind in Tabelle 1 aufgeführt.

Tabelle 1

| Bei-spiel | Fäll-mittel | Äquivalente bezogen auf Gesamteisen- | $Fe^{3+}$-Anteil $[Mol\text{-}\%]$ | Al- $[Mol\%]$ | P- Zusatz $[Mol\%]$ | Spezifische Oberfläche des Magnetits $[M^2/g]$ BET | Glühtem-peratur/ Dauer $[°C/min]$ | CIELAB-Farbdaten DIN 6174 C/2 grd 10 % PVK Alkydal F 48 Hellig-keit $[L*]$ | Rotton $[a*]$ | Gelbton $[b*]$ |
|---|---|---|---|---|---|---|---|---|---|---|
| 3 | MgO | 0,6 | 8,3 | | | 58 | 800°C/30' | 40,3 | 27,6 | 21,9 |
| 4 | MgO | 1 | 8,3 | | | 32 | 800°C/30' | 40,4 | 29,2 | 21,7 |
| 5 | NaOH | 1 | 8,3 | | | 31 | 800°C/30' | 39,4 | 27,9 | 20,1 |
| 6 | MgO | 0,6 | 5,6 | | | 35 | 800°C/30' | 40,3 | 27,0 | 22,5 |
| 7 | MgO | 1,1 | 8,3 | 1,4 | | 27 | 800°C/30' | 40,8 | 26,7 | 22,6 |
| 8 | MgO | 1,1 | 8,3 | 2,8 | | 29 | 800°C/30' | 41,6 | 27,1 | 23,1 |
| 9 | NaOH | 1,0 | 5,6 | | 1,6 | 33 | 800°C/30' | 41,1 | 27,2 | 21,7 |

Vergleichsbeispiele

| | | | | | | | | | | |
|---|---|---|---|---|---|---|---|---|---|---|
| A | NaOH | 1 | | | | 15 | 800°C/30' | 37,9 | 24,7 | 17,8 |
| B | MgO | 1 | | | | 15 | 800°C/30' | 36,7 | 24,0 | 14,2 |
| C | MgO | 0,6 | | | | 16 | 800°C/30' | 37,0 | 25,1 | 15,6 |

Ansprüche

1. Verfahren zur Herstellung heller farbreiner Eisenoxidrotpigmente durch Fällung von Eisen(II) salzen mit

6

Alkali in wäßriger Lösung und Oxidation bei Temperaturen von 20 bis 100°C und Verglühen der so erhaltenen Fällprodukte unter Luft zu Eisenoxidrotpigmenten, dadurch gekennzeichnet, daß vor der Zugabe des alkalischen Fällmittels ein Eisen(III)gehalt von 1 bis 15 Mol-%, bezogen auf den Gesamteisengehalt der Eisensalzlösung, eingestellt wird.

2. Verfahren gemäß Anspruch 1, dadurch gekennzeichnet, daß als Oxidationsmittel Luft eingesetzt wird.

3. Verfahren gemäß einem der Ansprüche 1 oder 2, dadurch gekennzeichnet, daß der Eisen(III)gehalt bei einem pH-Wert < 3 durch Oxidation mittels Luft erzeugt wird.

4. Verfahren gemäß einem der Ansprüche 1 bis 3, dadurch gekennzeichnet, daß als Eisen(II)salze bevorzugt Sulfate und/oder Chloride aus Stahlbeizereien und/oder der Titandioxidproduktion eingesetzt werden.

5. Verfahren gemäß einem der Ansprüche 1 bin 4, dadurch gekennzeichnet, daß als Fällmittel bevorzugt NaOH, NH$_3$, Na$_2$CO$_3$, MgO und/oder MgCO$_3$ eingesetzt werden.

6. Verfahren gemäß einem der Ansprüche 1 bis 5, dadurch gekennzeichnet, daß mit 0,5 bis 1,3 Äquivalenten, bevorzugt 0,8 bis 1,3, des alkalischen Fällmittels gefällt wird.

7. Verfahren gemäß einem der Ansprüche 1 bis 6, dadurch gekennzeichnet, daß vor der Fällung ein lösliches Aluminiumsalz in Mengen von 1 bis 10 Mol-%, bezogen auf den Gesamteisengehalt der Lösung, zugesetzt wird.

8. Verfahren gemäß einem der Ansprüche 1 bis 7, dadurch gekennzeichnet, daß vor der Fällung ein lösliches Phosphorsalz in Mengen von 1 bis 5 Mol-%, bezogen auf den Gesamteisengehalt, der Lösung zugesetzt wird.

9. Verfahren gemäß einem der Ansprüche 1 bis 8, dadurch gekennzeichnet, daß das gefällte Eisenoxidschwarz salzfrei gewaschen, getrocknet und bei 700 bis 1100, vorzugsweise 800 bis 950°C, verglüht und gemahlen wird.

10. Verwendung der gemäß einem oder mehrerer der Ansprüche 1 bis 9 hergestellten Eisenoxidrotpigmente zur Einfärbung im Lack-, Keramik-, Baustoff-, Kunststoffbereich.

## Claims

1. A process for the preparation of iron oxide red pigments which are light and pure in colour by the precipitation of iron(II) salts with alkalies in aqueous solution and oxidation at temperatures from 20 to 100°C and annealing of the resulting precipitation products in air to form iron oxide red pigments, characterised in that prior to the addition of the alkaline precipitating agent, the iron(III) content is adjusted to 1 to 15 mol-%, based on the total iron content of the iron salt solution.

2. A process according to Claim 1, characterised in that the oxidizing agent used is air.

3. A process according to one of the Claims 1 or 2, characterised in that the iron(III) content is produced by oxidation with air at a pH < 3.

4. A process according to one of the Claims 1 to 3, characterised in that the iron(II) salts used are preferably sulphates and/or chlorides obtained from steel pickling plants and/or the production of titanium dioxide.

5. A process according to one of the Claims 1 to 4, characterised in that the precipitating agent used is preferably NaOH, NH$_3$, Na$_2$CO$_3$, MgO and/or MgCO$_3$.

6. A process according to one of the Claims 1 to 5, characterised in that precipitation is carried out with 0.5 to 1.3 equivalents, preferably 0.8 to 1.3 equivalents of the alkaline precipitating agent.

7. A process according to one of the Claims 1 to 6, characterised in that a soluble aluminium salt is added before the precipitation in quantities of from 1 to 10 mol-%, based on the total iron content of the solution.

8. A process according to one of the Claims 1 to 7, characterised in that before precipitation, a soluble phosphorus salt is added to the solution in quantities of from 1 to 5 mol-%, based on the total iron content.

9. A process according to one of the Claims 1 to 8, characterised in that the precipitated iron oxide black is washed free from salt, dried and annealed at 700 to 1100° C, preferably 800 to 950° C, and ground.

10. Use of the iron oxide red pigments prepared according to one or more of Claims 1 to 9 for colouring in the field of lacquers, ceramics, building materials and plastics.

**Revendications**

1. Procédé de préparation d'oxydes de fer pigmentaires rouges à teinte pure et vive par précipitation de sels ferreux à l'aide d'un alcali en solution aqueuse et oxydation à des températures de 20 à 100° C puis calcination du produit précipité à l'air, donnant l'oxyde de fer pigmentaire rouge, caractérisé en ce que, avant l'addition de l'agent précipitant alcalin, on règle à une teneur en fer-III de 1 à 15 mol % par rapport au fer total de la solution de sel de fer.

2. Procédé selon la revendication 1, caractérisé en ce que l'agent oxydant utilisé est l'air.

3. Procédé selon l'une des revendications 1 ou 2, caractérisé en ce que la teneur en fer-III est établie à un pH inférieur à 3 par oxydation à l'air.

4. Procédé selon l'une des revendications 1 à 3, caractérisé en ce que l'on utilise de préférence en tant que sels ferreux des sulfates et/ou chlorures provenant d'opérations de décapage d'aciers et/ou de la production du bioxyde de titane.

5. Procédé selon l'une des revendications 1 à 4, caractérisé en ce que l'on utilise de préférence en tant qu'agents précipitants NaOH, $NH_3$, $Na_2CO_3$, MgO et/ou $MgCO_3$.

6. Procédé selon l'une des revendications 1 à 5, caractérisé en ce que l'on précipite par 0,5 à 1,3 équivalents, de préférence 0,8 à 1,3 équivalents, de l'agent précipitant alcalin.

7. Procédé selon l'une des revendications 1 à 6, caractérisé en ce que, avant la précipitation, on ajoute un sel d'aluminium soluble en quantité de 1 à 10 mol % par rapport au fer total de la solution.

8. Procédé selon l'une des revendications 1 à 7, caractérisé en ce que, avant la précipitation, on ajoute à la solution un sel de phosphore soluble en quantité de 1 à 5 mol % par rapport au fer total.

9. Procédé selon l'une des revendications 1 à 8, caractérisé en ce que l'on lave l'oxyde de fer noir précipité jusqu'à élimination des sels, on le sèche, on le calcine à des températures de 700 à 1 100, de préférence de 800 à 950° C et on le broie.

10. Utilisation des oxydes de fer pigmentaires rouges préparés selon une ou plusieurs des revendications 1 à 9 pour la coloration des produits de revêtements, des matières céramiques, des matériaux de construction, des matières plastiques.

FIG. 1

FIG. 2

FIG. 3